# EUROPEAN PATENT APPLICATION

(11) **EP 2 056 546 A1**
(43) Date of publication of application: **06.05.2009**
(21) Application number: 08167916.9
(22) Date of filing: 30.10.2008
(51) Int. Cl.: H04L 12/66, H04L 29/06

(54) **Proxy Authentication Server**

(30) Priority: 30.10.2007 US 929704
(71) Applicant: Ricoh Company, Ltd., Tokyo 143-8555 (JP)
(72) Inventor: Woo, James, Cupertino,, CA 95014 (US)
(74) Representative: Schwabe - Sandmair - Marx

(57) **Abstract**

Techniques and systems for allowing a client to interact with a Microsoft Windows Server via a proxy authentication server are disclosed. Instead of engaging in the NTLM authentication protocol with a Microsoft Windows Server directly, a client may interact with a proxy authentication server. The proxy authentication server may perform all of the necessary NTLM interactions with the Microsoft Windows Server. Thus, the proxy authentication server authenticates itself with the Microsoft Windows Server, and acts as the client's agent. Because the client does not directly interact with the Microsoft Windows Server, the client does not need to authenticate itself with the Microsoft Windows Server; instead, after the proxy authentication server authenticates itself with the Microsoft Windows Server, the client can transact the client's business with the Microsoft Windows Server through the authenticated proxy authentication server. The proxy authentication server can act on behalf of multiple different clients in a network.

## Description

### BACKGROUND OF THE INVENTION

### 1. Field of the Invention

The invention relates to security, and more specifically, to systems and techniques for allowing a client to interact indirectly with a Microsoft Windows Server via a proxy authentication server that authenticates itself with the Microsoft Windows Server on the client's behalf.

### 2. Description of the Related Art

Networked devices often need to communicate with each other in order to perform tasks. For example, a client might need to communicate over a network with a server in order to access the services that the server provides. Typically, the owners of the server want to ensure that only certain authorized clients are able to access the services that the server provides.

In order to prevent unauthorized clients from accessing the services that a server provides by pretending to be authorized clients, authentication schemes are sometimes employed. Through an authentication scheme, a client is able to prove to a server that the client is authentic-that is, that the client actually is the authorized client that the client purports to be. One kind of authentication scheme involves the use of a digital certificate. A client provides, to a server, a digital certificate that the client obtained from a server-trusted certificate authority. Because the client can only obtain a digital certificate from the trusted certificate authority if the client actually is authentic, the server accepts the digital certificate as proof of the client's authenticity.

Digital certificates expire upon the passage of a specified period of time after the certificate issuance date. Before a client's digital certificate is set to expire, the client is required to renew the digital certificate by interacting with the certificate authority that originally issued the digital certificate. Often, the certificate authority resides on a Microsoft Windows Server. Before the client can interact with such a certificate authority, the client is required to authenticate itself to the Microsoft Windows Server using the NT LAN Manager ("NTLM") authentication protocol.

There are various versions of the NTLM authentication protocol, but all of the versions typically involve a message exchange between the client and the Microsoft Windows Server. One of the messages (a "type 2" message) includes a random challenge from the Microsoft Windows Server. The client is required to reply to this message with another message (a "type 3" message) that includes data that the client has generated based on both the random challenge and some secret that is shared by the client and the Microsoft Windows Server (and unknown to unauthorized entities). For example, to generate this data, the client may encrypt the random challenge using some agreed-upon hashing and encryption algorithms (e.g., MD4/MD5 hashing and DES encryption) in which the shared secret is used as a key. When the Microsoft Windows Server receives the client's message, the Microsoft Windows Server attempts, using the shared secret, to reconstruct (e.g., through decryption) the random challenge from the message data. If the Microsoft Windows Server is able to do so successfully, then this is evidence that the client is in possession of the shared secret, and that the client is, therefore, authentic.

Unfortunately, in order for a client to be able to participate in the NTLM authentication protocol, specific NTLM-authentication code must be incorporated into the client. The inclusion of this code into a client increases the complexity of the client and makes the client more difficult to implement. This increases the cost of creating the client. This also makes the process of creating the client more susceptible to errors.

Based on the foregoing, there is a need for a way of allowing a client to authenticate itself with a Microsoft Windows Server, using the NTLM authentication protocol, without requiring the client to contain specific NTLM-authentication code.

### SUMMARY OF THE INVENTION

Techniques and systems for allowing a client to interact with a Microsoft Windows Server via a proxy authentication server are disclosed. In one embodiment of the invention, instead of engaging in the NTLM authentication protocol with a Microsoft Windows Server directly, a client instead interacts with a proxy authentication server. The client does not need to have any awareness of the NTLM authentication protocol. The proxy authentication server interacts with the Microsoft Windows Server on the client's behalf, performing all of the necessary NTLM interactions with the Microsoft Windows Server. Thus, the proxy authentication server authenticates itself with the Microsoft Windows Server, and acts as the client's agent. Because the client does not directly interact with the Microsoft Windows Server, the client does not need to authenticate itself with the Microsoft Windows Server; instead, after the proxy authentication server authenticates itself with the Microsoft Windows Server, the client can transact the client's business with the Microsoft Windows Server through the authenticated proxy authentication server. The proxy authentication server can act on behalf of multiple different clients in a network, thereby sparing each such client from the task of performing NTLM interactions directly with the Microsoft Windows Server.

Other objects, features and advantages of the present invention will become more apparent from the following detailed description when read in conjunction with the accompanying drawings.

### BRIEF DESCRIPTION OF THE DRAWINGS

FIG. 1 is a block diagram that illustrates an example system in which a proxy authentication server authenticates itself with a Microsoft Windows Server and thereafter interacts with the Microsoft Windows Server on the client's behalf, according to an embodiment of the invention;
FIGs. 2A and 2B are flow diagrams that illustrate an example technique by which a proxy authentication server authenticates itself with a Microsoft Windows Server and thereafter interacts with the Microsoft Windows Server on the client's behalf, according to an embodiment of the invention; and
FIG. 3 is a block diagram that depicts a device upon which an embodiment of the invention may be implemented.

### DETAILED DESCRIPTION OF THE PREFERRED EMBODIMENTS

In the following description, for the purposes of explanation, specific details are set forth in order to provide a thorough understanding of the invention. However, it will be apparent that the invention may be practiced without these specific details. In some instances, well-known structures and devices are depicted in block diagram form in order to avoid unnecessarily obscuring the invention.

### OVERVIEW

Techniques and systems for allowing a client to interact with a Microsoft Windows Server via a proxy authentication server are disclosed. In one embodiment of the invention, instead of engaging in the NTLM authentication protocol with a Microsoft Windows Server directly, a client interacts with a proxy authentication server. The client does not need to have any awareness of the NTLM authentication protocol. The proxy authentication server interacts with the Microsoft Windows Server on the client's behalf, performing all of the necessary NTLM authentication protocol interactions with the Microsoft Windows Server. Thus, the proxy authentication server authenticates itself with the Microsoft Windows Server, and acts as the client's agent. Because the client does not directly interact with the Microsoft Windows Server, the client does not need to authenticate itself with the Microsoft Windows Server; instead, after the proxy authentication server authenticates itself with the Microsoft Windows Server, the client can transact the client's business with the Microsoft Windows Server through the authenticated proxy authentication server. The proxy authentication server can act on behalf of multiple different clients in a network, thereby sparing each such client from the task of performing NTLM authentication protocol interactions directly with the Microsoft Windows Server.

### EXAMPLE PROXY AUTHENTICATION SYSTEM

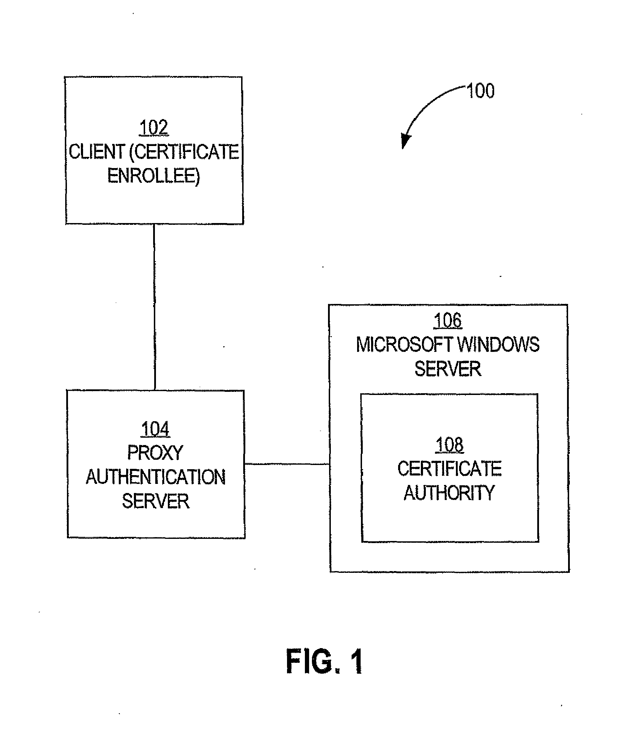

FIG. 1 is a block diagram that illustrates an example system in which a proxy authentication server authenticates itself with a Microsoft Windows Server and thereafter interacts with the Microsoft Windows Server on the client's behalf, according to an embodiment of the invention. System 100 comprises a client 102, a proxy authentication server 104, and Microsoft Windows Server 106. In one embodiment of the invention, Microsoft Windows Server 106 is Microsoft Windows Server 2003. Although system 100 contains Microsoft Windows Server 106, in alternative embodiments of the invention, any server that authenticates clients using the NTLM authentication protocol may be substituted from Microsoft Windows Server 106. Alternative embodiments of the invention may comprise more, fewer, or different components than those illustrated in this example.

Client 102 may be a personal computer, a laptop computer, a cell phone, a personal digital assistant, a printer, a copy machine, a multifunction printer (MFP), a camera, a digital audio player, an appliance, a network hub, a network bridge, a network router, a mobile device, or any other electronic device. Alternatively, client 102 may be a program that executes on any of the listed devices. Client 102 seeks to obtain a digital certificate (either new or renewed). Therefore, client 102 is also called a "certificate enrollee."

In one embodiment of the invention, proxy authentication server 104 is a program that performs operations as described herein. Proxy authentication server 104 may execute on the same device on which client 102 resides. Alternatively, proxy authentication server 104 may communicate with client 102 via a local area network (LAN), wide area network (WAN), and/or a series of interconnected networks such as the Internet. Client 102 and proxy authentication server 104 may communicate with each other via Internet Protocol (IP), Transmission Control Protocol (TCP), and Hypertext Transfer Protocol (HTTP), among potentially other protocols. In one embodiment of the invention, proxy authentication server 104 communicates with Microsoft Windows Server 106 via a network such as a LAN, a WAN, and/or the Internet. In one embodiment of the invention, proxy authentication server 104 communicates with Microsoft Windows Server 106 using IP, TCP, and HTTP, and/or other protocols.

As shown in FIG. 1, a certificate authority 108 executes on Microsoft Windows Server 106. Certificate authority 108 receives enrollment and renewal requests for digital certificates. Certificate authority 108 responds to such the renewal requests with digital certificates. For example, certificate authority 108 may receive a renewal request from client 102. However, in one embodiment of the invention, Microsoft Windows Server 106 intercepts all requests that are sent to certificate authority 108. Microsoft Windows Server 106 determines whether the entity from which such a request was received has been authenticated using the NTLM authentication protocol. If Microsoft Windows Server 106 determines that the entity has been authenticated, then Microsoft Windows Server 106 allows certificate authority 108 to receive the request.

Alternatively, if Microsoft Windows Server 106 determines that the entity has not yet been authenticated, then Microsoft Windows Server 106 prevents the request from reaching certificate authority 108. Under these circumstances, Microsoft Windows Server 106 initializes the process for authenticating the entity from which the request originated. The process follows the NTLM authentication protocol. The NTLM authentication protocol is described in "The NTLM Authentication Protocol and Security Support Provider," by Eric Glass (2006), which is incorporated by reference herein. A technique whereby proxy authentication server 104 authenticates with Microsoft Windows Server 106 on behalf of client 102 is described herein. As a result of this technique, client 102 does not need to be aware of the NTLM authentication protocol.

### PERFORMING NTLM AUTHENTICATION ON BEHALF OF A CERTIFICATE ENROLLEE

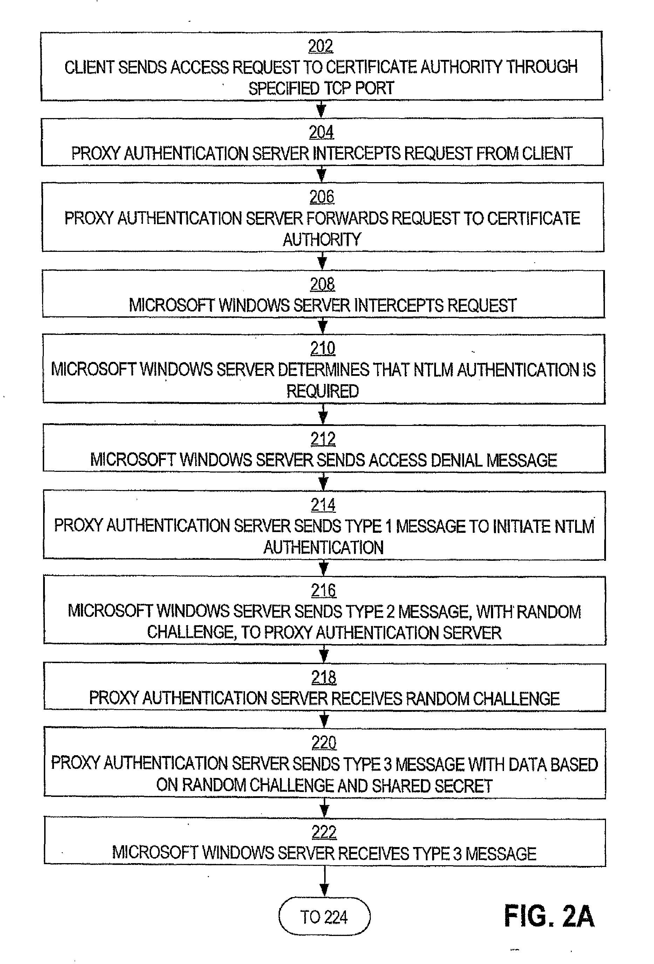

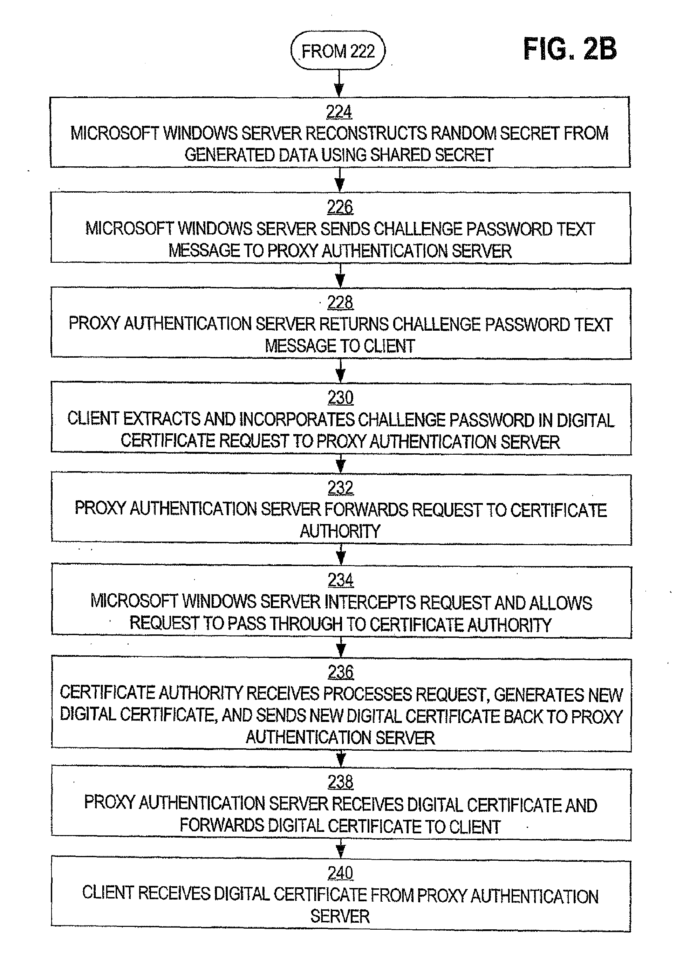

FIGs. 2A and 2B are flow diagrams that illustrate an example technique by which a proxy authentication server authenticates itself with a Microsoft Windows Server and thereafter interacts with the Microsoft Windows Server on the client's behalf, according to an embodiment of the invention. Alternative embodiments may involve more, fewer, or different steps than those illustrated in FIGs. 2A and 2B.

Referring first to FIG. 2A, in block 202, client 102 sends an access request toward certificate authority 108 through a specified TCP port. The specified TCP port is a different TCP port than the TCP port through which client 102 would otherwise send such a request. For example, if client 102 would normally send such a request on TCP port 80-the TCP port on which certificate authority 108 listens for such requests-then client 102 may send such a request on TCP port 8800 instead, for example. The specified TCP port through which client 102 sends the request is the TCP port on which proxy authentication server 104 listens for such requests. Sending requests through this specified TCP port instead of the normal TCP port allows proxy authentication server 104 to intercept the requests before the requests reach Microsoft Windows Server 106. In one embodiment of the invention, instead of sending the request to the IP address of Microsoft Windows Server 106, client 102 sends the request to the IP address of proxy authentication server 104.

In block 204, proxy authentication server 104 intercepts the request that client 102 sent through the specified TCP port.

In block 206, proxy authentication server 104 forwards the request toward certificate authority 108 and Microsoft Windows Server 106.

In block 208, Microsoft Windows Server 106 intercepts the access request from proxy authentication server 104. In block 210, Microsoft Windows Server 106 determines that proxy authentication server 104 has not yet been authenticated using the NTLM authentication protocol. In block 212, Microsoft Windows Server 106 denies access by responding to proxy authentication server 104 with a message that indicates access unauthorized.

In block 214, proxy authentication server 104 initiates NTLM authentication with Microsoft Windows Server 106 on behalf of client 102. Proxy authentication server 104 then sends a message to the Microsoft Windows Server 106 that contains the negotiation parameters that are ordinarily proposed in a "Type 1" message according to the NTLM authentication protocol. In one embodiment of the invention, proxy authentication server 104 maintains, in memory, a mapping that allows proxy authentication server 104 to remember from where the request originated, so that proxy authentication server 104 can forward any post-authentication messages from certificate authority 108 back to the appropriate entity (in this case, client 102). In one embodiment of the invention, proxy authentication server 104 interacts with Microsoft Windows Server 106 on behalf on multiple different clients concurrently.

In block 216, Microsoft Windows Server 106 responds by sending a message that contains a random challenge. In one embodiment of the invention, this message is a "Type 2" message according to the NTLM authentication protocol.

In block 218, proxy authentication server 104 receives the message and the random challenge contained therein. In one embodiment of the invention, proxy authentication server 104 has been configured with and knows a shared secret (e.g., a password or key) that Microsoft Windows Server 106 expects all authorized clients to know. In one embodiment of the invention, client 102 does not even know or possess this shared secret, because proxy authentication server 104 assumes the responsibility for knowing this secret. In block 220, proxy authentication server 104 generates data based on both the shared secret and the random challenge. For example, in one embodiment of the invention, proxy authentication server 104 generates the data by hashing and/or encrypting the random challenge according to agreed-upon hash and/or encryption algorithms, using the secret as a hash and/or encryption key. Proxy authentication server 104 sends, to Microsoft Windows Server 106, a message that contains the data that proxy authentication server 104 generated. In one embodiment of the invention, this message is a "Type 3" message according to the NTLM authentication protocol.

In block 222, Microsoft Windows Server 106 receives the message, including the data that proxy authentication server 104 generated. Referring now to FIG. 2B, in block 224, Microsoft Windows Server 106 uses the same shared secret that proxy authentication server 104 used to generate the data to reconstruct, from the data, the original random challenge that Microsoft Windows Server 106 sent to proxy authentication server 104 in block 216. As a result of being able to reconstruct the original random challenge, Microsoft Windows Server 106 knows that proxy authentication server 104 knows the shared secret, and, therefore, that proxy authentication server 104 is authentic. Thus, proxy authentication server 104 is authenticated. In one embodiment of the invention, Microsoft Windows Server 106 sends, to proxy authentication server 104, a notification that informs proxy authentication server 104 that proxy authentication server 104 is now considered to be authenticated.

At this point, because Microsoft Windows Server 106 considers proxy authentication server 104 to be authenticated, Microsoft Windows Server 106 will allow requests from proxy authentication server 104 to reach certificate authority 108. In block 226, Microsoft Windows Server 106 returns a challenge password message to client 102 via proxy authentication server 104.

In block 228, proxy authentication server 104 returns the challenge password text message to client 102.

In block 230, client 102 incorporates the challenge password in the digital certificate request to the certificate authority 108 via the proxy authentication server 104. In one embodiment of the invention, client 102 sends the digital certificate request via proxy authentication server 104 to Microsoft Windows Server 106.

In block 232, proxy authentication server forwards the certificate request to certificate authority 108.

In block 234, Microsoft Windows Server 106 intercepts the request and allows the request to pass through to certificate authority 108.

In block 236, certificate authority 108 receives the certificate request, generates a new digital certificate, and sends the new digital certificate to proxy authentication server 104. In block 238, proxy authentication server 104 receives the digital certificate and forwards the digital certificate to client 102. Finally, in block 240, client 102 receives the digital certificate.

As a result of the technique described above, client 102 is able to obtain a new digital certificate without ever participating in any NTLM authentication protocol exchange with Microsoft Windows Server 106. Indeed, client 102 does not even need to be aware of the NTLM authentication protocol. In one embodiment of the invention, after proxy authentication server 104 has authenticated itself with Microsoft Windows Server 106, proxy authentication server 104 passes through all communications from client 102 to Microsoft Windows Server 106, and passes through all communications from Microsoft Windows Server 106 to client 102.

### USING SSH TO CONNECT TO A PROXY AUTHENTICATION SERVER

In one embodiment of the invention, instead of having a separate proxy authentication server for each client (e.g., executing on the same computer), multiple clients on multiple computers all communicate with one proxy authentication server that executes on a computer that is separate and remote from the computers on which the clients execute. In such an embodiment of the invention, it may be desirable, for security purposes, to allow only certain known and trusted clients to use the services of the proxy authentication server.

Thus, in one embodiment of the invention, proxy authentication server 104 stores a list of clients that are allowed to use the services of proxy authentication server 104. For example, proxy authentication server 104 may store a list of IP addresses of approved clients. In such an embodiment of the invention, if proxy authentication server 104 receives a message from a client whose IP address is not on the list, then proxy authentication server 104 refuses to act on behalf of that client (e.g., in dealing with Microsoft Windows Server 106 and certificate authority 108).

However, because the list of approved clients may frequently change over time, administering and keeping current a list of approved clients can be a hassle for an administrator. Therefore, in one embodiment of the invention, instead of maintaining a list of approved clients on proxy authentication server 104, proxy authentication server 104 requires all clients to communicate with proxy authentication server 104 using the Secure Shell ("SSH") protocol. The SSH protocol is a network protocol that allows data to be exchanged over a secure channel between two computers. Encryption provides confidentiality and integrity of data. The SSH protocol uses public key cryptography to authenticate a remote computer and allows a remote computer to authenticate a user or client. Because only approved clients will have the information required to communicate with proxy authentication server 104 using the SSH protocol, requiring all clients to communicate with proxy authentication server 104 using the SSH protocol ensures that all clients that do communicate with proxy authentication server 104 actually are approved clients. The SSH protocol is described in Internet Engineering Task Force (IETF) Request For Comments (RFC) 4251, IETF RFC 4252, IETF RFC 4253, IETF RFC 4254, IETF RFC 4255, and IETF RFC 4256, each of which is incorporated by reference herein.

In one embodiment of the invention, client 102 establishes a SSH channel between client 102 and proxy authentication server 104. Thereafter, all communications between client 102 and proxy authentication server 104 pass through the encrypted SSH channel. In one embodiment of the invention, secret information, such as a password and/or username, is stored at proxy authentication server 104 and client 102. Unauthorized entities do not know the secret information. In such an embodiment of the invention, client 102 uses the secret information in order to establish the SSH channel. Thus, entities who do not possess the secret information cannot establish the SSH channel with proxy authentication server 104. Each approved client may be configured with the same secret information. In one embodiment of the invention, proxy authentication server 104 rejects any connection attempt that does not use an SSH channel. For example, client 102 may establish a secure connection between TCP port 8800 on client 102 and TCP port 9900 on proxy authentication server 104. Client 102 may then send all digital certificate requests through TCP post 8800 on client 102. As a result, digital certificate requests are transmitted to proxy authentication server 104 through an encrypted tunnel.

### IMPLEMENTATION MECHANISMS

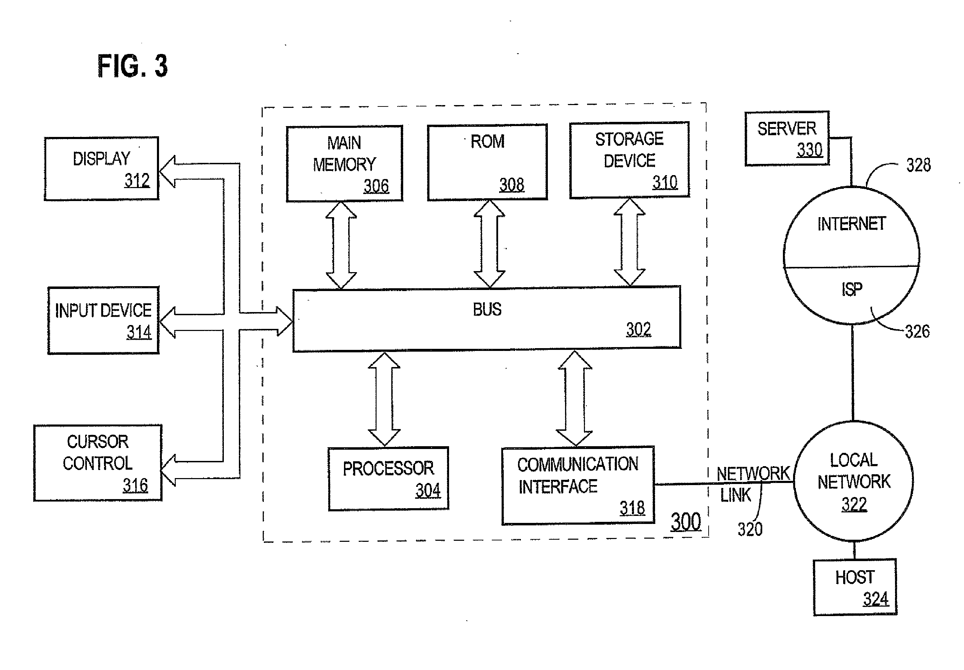

The approach described herein may be implemented on any type of computing platform or architecture. FIG. 3 is a block diagram that depicts an example computer system 300 upon which embodiments of the invention may be implemented. Computer system 300 includes a bus 302 or other communication mechanism for communicating information, and a processor 304 coupled with bus 302 for processing information. Computer system 300 also includes a main memory 306, such as a random access memory (RAM) or other dynamic storage device, coupled to bus 302 for storing information and instructions to be executed by processor 304. Main memory 306 also may be used for storing temporary variables or other intermediate information during execution of instructions to be executed by processor 304. Computer system 300 further includes a read only memory (ROM) 308 or other static storage device coupled to bus 302 for storing static information and instructions for processor 304. A storage device 310, such as a magnetic disk or optical disk, is provided and coupled to bus 302 for storing information and instructions.

Computer system 300 may be coupled via bus 302 to a display 312, such as a cathode ray tube (CRT), for displaying information to a computer user. An input device 314, including alphanumeric and other keys, is coupled to bus 302 for communicating information and command selections to processor 304. Another type of user input device is cursor control 316, such as a mouse, a trackball, or cursor direction keys for communicating direction information and command selections to processor 304 and for controlling cursor movement on display 312. This input device typically has two degrees of freedom in two axes, a first axis (e.g., x) and a second axis (e.g., y), that allows the device to specify positions in a plane.

The invention is related to the use of computer system 300 for implementing the techniques described herein. According to one embodiment of the invention, those techniques are performed by computer system 300 in response to processor 304 executing one or more sequences of one or more instructions contained in main memory 306. Such instructions may be read into main memory 306 from another computer-readable medium, such as storage device 310. Execution of the sequences of instructions contained in main memory 306 causes processor 304 to perform the process steps described herein. In alternative embodiments, hard-wired circuitry may be used in place of or in combination with software instructions to implement the invention. Thus, embodiments of the invention are not limited to any specific combination of hardware circuitry and software.

The term "computer-readable medium" as used herein refers to any medium that participates in providing data that causes a machine to operation in a specific fashion. In an embodiment implemented using computer system 300, various computer-readable media are involved, for example, in providing instructions to processor 304 for execution. Such a medium may take many forms, including but not limited to, non-volatile media and volatile media. Non-volatile media includes, for example, optical or magnetic disks, such as storage device 310. Volatile media includes dynamic memory, such as main memory 306.

Common forms of computer-readable media include, for example, a floppy disk, a flexible disk, hard disk, magnetic tape, or any other magnetic medium, a CD-ROM, any other optical medium, punchcards, papertape, any other physical medium with patterns of holes, a RAM, a PROM, and EPROM, a FLASH-EPROM, any other memory chip or cartridge, or any other medium from which a computer can read.

Various forms of computer-readable media may be involved in carrying one or more sequences of one or more instructions to processor 304 for execution. For example, the instructions may initially be carried on a magnetic disk of a remote computer. The remote computer can load the instructions into its dynamic memory and send the instructions over a telephone line using a modem. A modem local to computer system 300 can receive the data on the telephone line and use an infra-red transmitter to convert the data to an infra-red signal. An infra-red detector can receive the data carried in the infra-red signal and appropriate circuitry can place the data on bus 302. Bus 302 carries the data to main memory 306, from which processor 304 retrieves and executes the instructions. The instructions received by main memory 306 may optionally be stored on storage device 310 either before or after execution by processor 304.

Computer system 300 also includes a communication interface 318 coupled to bus 302. Communication interface 318 provides a two-way data communication coupling to a network link 320 that is connected to a local network 322. For example, communication interface 318 may be an integrated services digital network (ISDN) card or a modem to provide a data communication connection to a corresponding type of telephone line. As another example, communication interface 318 may be a local area network (LAN) card to provide a data communication connection to a compatible LAN. Wireless links may also be implemented. In any such implementation, communication interface 318 sends and receives electrical, electromagnetic or optical signals that carry digital data streams representing various types of information.

Network link 320 typically provides data communication through one or more networks to other data devices. For example, network link 320 may provide a connection through local network 322 to a host computer 324 or to data equipment operated by an Internet Service Provider (ISP) 326. ISP 326 in turn provides data communication services through the world wide packet data communication network now commonly referred to as the "Internet" 328. Local network 322 and Internet 328 both use electrical, electromagnetic or optical signals that carry digital data streams. The signals through the various networks and the signals on network link 320 and through communication interface 318, which carry the digital data to and from computer system 300, are exemplary forms of carrier waves transporting the information.

Computer system 300 can send messages and receive data, including program code, through the network(s), network link 320 and communication interface 318. In the Internet example, a server 330 might transmit a requested code for an application program through Internet 328, ISP 326, local network 322 and communication interface 318.

The received code may be executed by processor 304 as it is received, and/or stored in storage device 310, or other non-volatile storage for later execution. In this manner, computer system 300 may obtain application code in the form of a carrier wave.

In the foregoing specification, embodiments of the invention have been described with reference to numerous specific details that may vary from implementation to implementation. Thus, the sole and exclusive indicator of what is, and is intended by the applicants to be, the invention is the set of claims that issue from this application, in the specific form in which such claims issue, including any subsequent correction. Hence, no limitation, element, property, feature, advantage or attribute that is not expressly recited in a claim should limit the scope of such claim in any way. The specification and drawings are, accordingly, to be regarded in an illustrative rather than a restrictive sense.

The present invention is not limited to the specifically disclosed embodiments, and variations and modifications may be made without departing from the scope of the present invention.

## Claims

1. A computer-implemented method for authenticating a client, the method **characterized by**:
receiving, from a client, at a proxy authentication server, a digital certificate request; and
in response to receiving the digital certificate request, the proxy authentication server engaging in an authentication process with a particular server on which a certificate authority resides, thereby sparing the client from participating in the authentication process with the particular server.

2. The method of Claim 1, wherein the step of receiving the digital certificate request from the client comprises receiving a digital certificate request that the client sent through a port other than a standard port on which digital certificate requests are normally sent.

3. The method of Claim 1, further comprising:
the proxy authentication server authenticating the proxy authentication server with the particular server through the authentication process;
the proxy authentication server sending the digital certificate request to the certificate authority after authenticating the proxy authentication server with the particular server;
the proxy authentication server receiving a digital certificate from the certificate authority in response to the certificate authority's receipt of the digital certificate request; and
the proxy authentication server sending the digital certificate to the client.

4. The method of Claim 1, further comprising:
the proxy server establishing a SSH channel with the client;
wherein the step of receiving the digital certificate request from the client comprises receiving the digital certificate request through the SSH channel.

5. A proxy authentication server that is configured to:
receive, from a client, a digital certificate request; and
engage in an authentication process with a particular server on which a certificate authority resides in response to receiving the digital certificate request, thereby sparing the client from participating in the authentication process with the particular server.

6. The proxy authentication server of Claim 5, further configured to receive the digital certificate request that the client sent through a port other than a standard port on which digital certificate requests are normally sent.

7. The proxy authentication server of Claim 5, further configured to:
authenticate the proxy authentication server with the particular server through the authentication process;
send the digital certificate request to the certificate authority after authenticating the proxy authentication server with the particular server; receive a digital certificate from the certificate authority in response to the certificate authority's receipt of the digital certificate request; and send the digital certificate to the client.

8. The proxy authentication server of Claim 5, further configured to:
establish a SSH channel with the client; and
receive the digital certificate request through the SSH channel.
